# EUROPÄISCHE PATENTSCHRIFT

(11) **EP 2 017 327 B1**
(45) Veröffentlichungstag und Bekanntmachung des Hinweises auf die Patenterteilung: **24.10.2012**
(21) Anmeldenummer: 08008980.8
(22) Anmeldetag: 15.05.2008
(51) Int. Cl.: C10L 5/38, C10L 5/44, C10L 5/46, C10L 5/48, C04B 33/32

(54) **Verfahren zum Brennen von Keramik**
Process for firing ceramics
Procédé de cuisson de céramique

(30) Priorität: 18.07.2007 DE 102007033298
(43) Veröffentlichungstag der Anmeldung: 21.01.2009
(73) Patentinhaber: Ziegelei Hilti, Mettauer GmbH, 6840 Götzis (AT)
(72) Erfinder: Niedermayr, Roland, 9493 Mauren (LI); Grehl, Anton, 89185 Hüttisheim/Humlangen (DE); Stadler, Karl, 87616 Marktoberdorf (DE)
(74) Vertreter: Riebling, Peter

(56) Entgegenhaltungen:
- EP-A- 0 010 792
- EP-A- 0 057 423
- DE-A1- 2 707 510
- DE-A1- 3 204 380
- DE-A1- 3 307 074
- DE-U1- 8 136 222
- GB-A- 347 266
- JP-A- 6 106 533
- US-A- 2 789 890

## Beschreibung

Die Erfindung betrifft ein Verfahren zum Brennen von Keramik, insbesondere von Ziegeln, nach dem Oberbegriff des unabhängigen Patentanspruches 1.

Insbesondere betrifft die Erfindung den Einsatz von biogenen (d.h. Material biologischen oder organischen Ursprungs) und/oder von synthetischen (d.h. Kunststoffe und andere Erdölprodukte) Abfällen (insbesondere aus dem Papierrecycling) zur Substitution von fossilen Energieträgern, zur Reduktion von CO₂-Emissionen in der Stein- und keramischen industrie und zur Erzeugung von Magerungsmittel als Zusatz für das Ziegel-Rohmaterial.

Ziegelwerke zählen aufgrund der erforderlichen Trocken- und Brenntechnik für ihre Produkte mit zu den großen, industriellen Energieverbrauchem. Gebrannt wird überwiegend in Tunnelöfen, deren Abwärme meist im Trockner genutzt wird. Der Energiebedarf zum Trocknen und Brennen von Mauerziegeln liegt je nach Ofentechnik, verwendetem Rohmaterial und Produkt zwischen 1,02 und 1,87 GJ/t (= 284 bis 520 kWh/t). Je nach vorliegendem Rohstoff (geringe Enthalpie = Summe aller Energien im Rohstoff) sind auch Verbrauchswerte von > 600 kWh/t erforderlich.

In Österreich beträgt die Jahresproduktion von Mauerziegeln der 22 Ziegelwerke etwa 1,335 Mio. t. Der Energieverbrauch für die Trocken- und Brennprozesse dieser Produktion erforderte im Jahr 2003 etwa 668 GWh, der ausschließlich mit fossilen Energieträgern gedeckt wurde. Zwei Werke verwenden Öl, 20 Werke brennen mit Erdgas.

Daraus resultiert eine jährliche CO₂-Emission von etwa 134.000 t. Diese Angabe beruht auf einem CO₂-Faktor für Erdgasverbrennung von 0,201 t /MWh.

Zusätzlich zur Klimabelastung stellt der rel. hohe Energiebedarf für jedes Ziegelwerk einen erheblichen Kostenfaktor dar, der nicht nur die Wettbewerbsfähigkeit dieser Betriebe stark beeinflusst, sondern angesichts von Gesamtkosten in Höhe von 40.080.000 €/a (gerechnet mit 0,06 €/kWh) auch von volkswirtschaftlicher Relevanz ist, da die Energieträger vorwiegend importiert werden müssen.

Es fehlte deshalb in der Vergangenheit nicht an Versuchen, den hohen Verbrauch an Primärenergie durch Einsatz billiger, energiehaltiger Zuschlagstoffe wie Sägemehl, Papierfangstoffe, Kohlenstaub u. ä. zu reduzieren. Aus der Produktion wärmedämmender Ziegel, die durch Zugabe von Porosierungsmitteln in den Ton erzeugt werden, ist bekannt, dass mit diesen Zuschlägen zugleich beachtliche Mengen an Energieträgern in den Ziegelton eingebracht werden. Dies gilt insbesondere bei Verwendung von Papierfangstoffen, Sägemehl und Kohlenstaub. So beträgt z. B. der Zuschlag bei einem konventionellen, hochporosierten Ziegel mit einer Scherben-Rohdichte von 0,8 kg/dm³ etwa 14% Papierfangstoff (näss). Die Enthalpie beträgt dann 792 kJ/kg bzw. 0,22 kWh/kg. Bei einem Gesamt-Energiebedarf von 1674 kJ/kg, entsprechend 0,465 kWh/kg, stellt diese Enthalpie mit 46,5% bereits eine erhebliche Einsparung an Primärenergie dar.

Man könnte aus dieser Überlegung schließen, dass das Energieproblem der Ziegelwerke auf einfache Weise dadurch zu lösen wäre, dass man die Zugabe energiehaltiger Zuschlagsstoffe wie Sägemehl, Papierfangstoffe, Kohle oder Styropor weiter erhöht. Sägemehl ist für diesen Zweck weniger geeignet, da es durch die erforderliche Vorbehandlung (Trocknen und Malen auf Körnung 1 bis 2 mm) zusätzliche Energie verbraucht und daher rel. teuer ist. Dem erhöhten Einsatz energiehaltiger Zuschlagstoffe stehen jedoch bisher nicht überwundene Schwierigkeiten der Brenntechnik gegenüber, die kurz geschildert werden.

Um hochwertige Ziegeleierzeugnisse zu erhalten, muss der Trocken- und Brennvorgang sehr genau gesteuert werden. In einem konventionellen Brennofen werden die Formlinge (= der Besatz) auf Ofenwagen geschichtet, die durch den Ofen geschoben werden. Vom Trockner kommend, treten die Formlinge mit einer Temperatur von - 150°C in den Brennofen ein. Im weiteren Verlauf des Brennprozesses wird die Temperatur durch Gas- oder Ölbrenner stetig erhöht. Die erforderliche Verbrennungsluft wird aus der Kühlzone im Gegenstrom zur Schubrichtung herbeigeführt.

Im Eingangsbereich beginnen Schwelgase auszutreten, die nachverbrannt werden. Dieser Vorgang muss abgeschlossen sein, wenn der Besatz die Brennzone erreicht, in der die Teile zum Garbrand eine gewisse Zeit verbleiben. Anschließend folgt eine rel. schnelle Abkühlphase bis oberhalb des sogenannten Quarzsprungs bei 573°C. Die Gegen-Kühlluft erwärmt sich dabei und wird dem Trockner zugeführt. Im Anschluss an diese Sturzkühlung folgt deshalb eine langsame Abkühlphase bis unterhalb des Quarzsprungs, die dann durch eine rasche Endkühlung bis zum Ofenausgang abgelöst wird. Die abgeführte Wärme wird zurückgewonnen und dem Trockner zugeführt.

Dieser Temperaturverlauf kann bisher durch die entsprechende Ansteuerung von Brennergruppen für Gas oder Öl, die in unterschiedlichen Ausführungen (z. B. Lanzen- und Zündbrenner) über die Ofenlänge verteilt sind, sowie durch entsprechende Führung der Luft und der Rauchgase sehr genau eingehalten werden. Die Rauchgase werden über sogenannte "Füchse" (=Kanal, der eine Feuerung mit dem Schornstein verbindet) zur Rauchgasnachverbrennung und von dort in den Schornstein geführt.

Mischt man dem Ton der Ziegel höhere Anteile an energiehaltigen Rohstoffen mit ausreichenden Energieinhalten zu, so entfällt jedoch die bisherige Temperatursteuerung mittels Brennern und Luftmengenverteilung. Der Einfluss, der über die Regelung der Erdgasbrenner auf den Brennprozess ausgeübt werden konnte, wird erheblich reduziert. An die Stelle der fossilen Energieträger tritt der Energieinhalt der Zuschlagstoffe der Ziegel, dessen Umsetzung in Wärmeenergie jedoch sehr viel schwieriger zu beeinflussen ist. Die Verbrennung im konventionellen Ofen setzt bereits im Eingangsbereich ein. Sie wird schnell unbeherrschbar, man sagt der Brennofen "geht durch", weil schon im Eingangsbereich hohe Konzentrationen an Schwelgasen auftreten, deren Verbrennung noch vor der Brennzone zu Überhitzungen führt, wobei sogar mit Explosionsgefahr gerechnet werden muss.

Ein weiterer Grund, der die Beimischung energiehaltiger Zuschlagsstoffe begrenzt, ist die erforderliche Rohdichte der Mauerziegel, die direkt proportional zur Druckfestigkeit verläuft. Beide Größen werden durch derartige Zusätze erheblich reduziert.

Die Verwendung von festen Brennstoffen, wie Kohle, Holz oder sonstige feste Brennstoffe durch Elnspelsung in den Brennraum ist ebenfalls Stand der Technik. Die entstehende Asche hat jedoch eine enorme Verschmutzung des Brennraums und des TOW-Belags sowie eine Erhöhung des Staubanfalles zur Folge. Dies führte zu erheblichen Betriebsstörungen und Verschmutzungen auch des Endprodukts, weshalb diese Art der Beheizung heute nicht mehr angewendet wird.

Der Einsatz von festen Brennstoffen in Kassetten ist ebenfalls bekannt und wird überwiegend von der Firma Andreas Hässler Anlagenbau angeboten. Problematisch ist bei diesem Verfahren, dass praktisch nur Kohle mit einer hohen Zündtemperatur eingesetzt werden kann, da Organik-Material, wie bereits beschrieben, auch in diesem Fall schon im Eingangsbereich des Brennofens verbrennen würde.

Wie bereits erläutert, kann die zum Trocknen und Brennen erforderliche Gas - oder Ölheizung eines Brennofens nicht einfach dadurch ersetzt werden, dass dem Rohmaterial der Ziegel in hohem Maße energiehaltige Zuschlagstoffe zugesetzt werden.

Die DE 8136222 U1 offenbart ein Handpressgerät zur Herstellung von Brennstoffbriketts aus getränktem Abfallpapier dessen Verdichtungsverhältnis 2 : 1 bis 2,5 : 1 beträgt.

Die US 2789890 A offenbart ein künstliches Feuerholz in Brikettform, das aus einem inneren Kern besteht, der von einer mit feuerhemmendem Mittel, z.B. Borax oder Borsäure, behandelten groben textilen Innenhülle, sowie nachfolgend von einer flexiblen, leicht entzündlichen, öl-, luft- und wasserdampfdichten Außenhülle aus Polymethylen umgeben ist. Der innere Kern besteht aus Sägespänen oder Sägemehl, welche im Verhältnis 50:50 mit gebrauchtem Öl getränkt und auf ein Verhältnis 1:1,75 verdichtet sind. Das Verbrennen der Außenhülle geht solange, bis sich der innere Kern entzündet, der wiederum während seines Verbrennens von der Innenhülle umgeben bleibt.

Die EP 0010792 A1 offenbart ein Verfahren zum Vergasen fester backender Brennstoffe in Form von kugelförmigen Pellets mit einem Durchmesser von 5 bis 50 mm mit einer weitgehend geschlossenen Hüllschicht aus feinkörnigem, nichtbackendem Material aus Kohle, aus Fremd- oder Eigenasche, Dolomit, Bentonit, Kalk, Montmorillonit, Zement, Zeolithe oder anderen anorganischen Stoffen, einer Stärke von 0,1 bis 2 mm...........................................................

Die JP 06106533 A offenbart die Verwendung von Abfallkunststoffen wie Polystyrol zur Herstellung von Brennstoffbriketts.

Die GB 347266 A offenbart einen zum Brennen von Ziegeln plattenförmigen Festbrennstoff, der zwischen die in einem Ofen aufgeschichtete Vielzahl von Ziegeln eingeschoben ist, wobei die Festbrennstoff-Platten zur Leitung von Verbrennungsluft in Dickenrichtung Durchgangslöcher, sowie auf der Ober- und Unterseite Längs- und Quernuten aufweisen. Die Festbrennstoff-Platten können auch aus Papier, Pappe, Holzchips, Sägespänen, ölhaltigem Ton, Hausmüll oder unverwertbarem Abfall aus Dampfkochern, Brennöfen oder Hochöfen sein. Die beim Brennen von Ziegeln verbrannten Reste dieser Festbrennstoff-Platten können auch in Töpfereien weiter verwertet werden.

Die DE 3204380 A1 offenbart ein Verfahren zum Brennen von Ziegeln in Tunnelöfen wobei brennstofflose/brennstoffarme Ziegel neben brennstoffüberschüssigen Ziegeln auf Brennwagen angeordnet werden.

Die DE 3307074 A1 offenbart ein Verfahren zur Herstellung von brennstoffhaltigen Strangziegeln, wobei im zeitlichen Verlauf der Formgebung unterschiedliche Festbrennstoffmengen z.B. Kohle in den Innenbereich des Strangquerschnitts eingeziegelt werden und die daraus geformten Formlinge programmiert auf unterschiedliche Bereiche eines Ofenwagens verteilt übereinander oder nebeneinander gesetzt werden. Insbesondere weisen die unteren Lagen von Strangziegeln im Ofen einen höheren Gehalt an Brennstoff mit früherem Zündpunkt auf als die übrigen Lagen von Strangziegeln.

Aufgabe der vorliegenden Erfindung ist es daher, die zum Herstellen von Keramik, insbesondere die zum Brennen von Ziegeln (Dach- oder Mauerziegeln) benötigte Energie für den Brennofen, die beim Stand der Technik bisher mittels Fossilbrennstoffen wie Gas-, ÖI- oder Kohleheizung erfolgte, mindestens teilweise durch wesentlich kostengünstigeres biogenes (biologisches/organisches) und/oder synthetisches Material, zu ersetzen, insbesondere enthaltend regenerative, nachwachsende Energiestoffe, um so eine kostengünstigere Herstellung von Keramik bzw. gebrannten Ziegeln zu ermöglichen, bei mindestens gleicher Qualität und mindestens gleicher Zuverlässigkeit der Herstellverfahren.

Zur Lösung der gestellten Aufgaben dienen die Merkmale des unabhängigen Patentanspruches 1 (Verfahren).

Vorteilhafte Ausgestaltungen sind Gegenstand der abhängigen Patentansprüche.

Erfindungsgemäß wird ein völlig neuer Weg beschritten, der darin besteht, dass die erforderlichen Energieträger biogenen (biologisches/organisches) und/oder synthetischen Ursprungs - Papier-Spuckstoff - hochverdichtet werden und in ausreichendem Maß in spezielle Brennkassetten gefüllt werden, die auf den Ofenwagen positioniert und somit zusammen mit dem Besatz durch den Brennofen geschoben werden.

Da auch in diesem Fall eine vorzeitige Verbrennung schon im Eingangsbereich des Brennofens auftreten würde, wurde eine Lösung dieses Problems dadurch gefunden, dass die verwendeten Energieträger zuvor pelletiert/brikettiert (hochverdichtet), mit Mineralstoffen vermischt, und mit dem optional gleichen Material mehr oder weniger stark beschichtet werden. Dabei wird die Art dieser Umhüllung so gewählt, dass die Mehrheit dieser Energieträger erst zu Beginn der Brennzone (bei ca. 600 °C), wo die Beschichtung zerfällt, ausreichend Sauerstoff zur Verbrennung erhält.

Hierfür wurde ein neuartiger Ofenwagen geschaffen, bei dem der herkömmliche schwere Unterbau durch einen leichten Isolieraufbau ersetzt wurde. Als Wärmeisolation wurde zudem eine 300 mm starke Schicht aus Keramikfasern eingebaut. Diese Matten bestehen aus einer Mischung von Al₂O₃ und SiO₂ und besitzen bei einer Dichte von z. B. 121 kg/m³ eine Wärmeleitfähigkeit λ im relevanten Temperaturbereich von 0,05 bis 0,07 W/m * K. Im Aufbau nach oben folgen auf die Wärmeisolierung feuerfeste Brennkassetten. Sie werden auf Stahlstützen gelagert, die auf den Rahmen aufgeschweisst sind. Die Kassetten dienen einerseits dazu, den Brennstoff in stückiger Form aufzunehmen und andererseits sind sie Unterlage für den Besatz aus den zu brennenden Formlingen. Der Besatz schließt also die Kassetten nach oben ab und verhindert dadurch, dass die Asche durch die Belüftung mitgerissen wird. Es entsteht also keine zusätzliche Staubbelastung.

Je nach Qualität der verwendeten Rohstoffe ist zusätzlich eine Rauchgasreinigung erforderlich. Aufgrund der Verwendung von Brennstoffen biogenen und/oder synthetischen Ursprungs werden wesentlich höhere Mengen an Schwelgasen und Kondensat als bisher anfallen. Dadurch ist eine ofeninterne oder externe Nachverbrennung erforderlich.

Als Brennstoff biogenen und/oder synthetischen Ursprungs wird "Spuckstoff" aus der Papierindustrie verwendet. Dabei handelt es sich um produktionsspezifische Abfälle aus der Papierindustrie, die ausschließlich bei der Verwendung von Altpapier anfallen. Die wichtigsten Inhaltsstoffe sind:
- Papierreste,
- Textilien,
- Füll- oder Streichpigmente aus grafischen Papieren,
- Styropor aus Verpackungsmaterialien,
- Beschichtungsmaterialien, Verbundstoffe,
- Fremdstoffe aus dem Büroalltag,
- hausmüllartige Fehlwürfe aus der kommunalen Papiertonne,
- Heftklammern,
- Folien, Kunststoffe,
- Sand.

Der Heizwert des Materials liegt bei etwa 12,5 bis 15 MJ/kg bzw. 3,47 bis 4,17 kWh/kg (bezogen auf die Trockensubstanz). Der Glühverlust beträgt 80%. Die Dichte des Materials liegt bei etwa 600 kg/m³. Der Anfall an Spuckstoff ist aufgrund der steigenden Verwertung von Altpapier ganz erheblich. In Deutschland soll er z. B. > 650 000 t/a betragen, wovon über 65% mangels geeigneter Entsorgungsmöglichkeit deponiert bzw. seit Neuestem in Müllverbrennungsanlagen entsorgt werden muss.

Würde man jedoch die Brennkassetten in den Ofenwagen ausschließlich mit Spuckstoff auffüllen, so würde die gesamte Energie bereits im Eingangsbereich des Ofens durch Pyrolyse/Verbrennung mit anschließender Verbrennung der Schwelgase (Verpuffung) in Wärmeenergie umgesetzt mit katastrophalen Folgen für das Produkt und den Brennofen. Um eine gesteuerte Energieerzeugung zu erreichen, wird deshalb der Spuckstoff einer speziellen Vorbehandlung unterzogen. Sie besteht darin, dass das Material zunächst im Verhältnis 1:1,2 bis 1:3 oder auch höher verdichtet und pelletiert oder brikettiert wird, bedarfsweise unter Zugabe von Ton. Diese verdichtete Masse erreicht dadurch einen Energieinhalt je nach zugefügtem Mineralstoff von 4,86 bis 5,84 kWh/kg. Durch die Pelletierung kann es wesentlich besser dosiert und damit an den Energiebedarf des Brennofens angepasst werden. Anschließend wird es, sofern erforderlich, mit einer spritzfähigen Mischung aus Wasser und Ton oder Asche bespritzt und dann getrocknet, wofür Abwärme aus dem Brennofen in ausreichender Menge zur Verfügung steht. Natürlich können auch zwei, drei oder mehrere pelletierte oder brikettierte Kerne mit einer diese umschließenden Beschichtung überzogen werden, so dass eine Vielzahl von hochverdichteten Kernen innerhalb eines einzigen "Pellets" oder "Briketts" vorliegen.

Die Trocknung der Pellets, die auf dem Förderband zur Beschickung der Brennkassetten erfolgen kann, ist deshalb erforderlich, weil der sonst im Brennofen aus den Pellets aufsteigende Wasserdampf zu feinen Rissen in den Formlingen führen würde.

Wie Laborversuche beweisen, ergibt sich aus dem Prozentsatz der mineralischen Beimischung und durch die Stärke der Umhüllung eine ausgezeichnete Methode zur Steuerung der Verbrennung der Pellets entsprechend dem benötigten Temperaturverlauf. Dieser wird praktisch durch die Gestaltung der Pellets vorprogrammiert. Das Verbrennen der Pellets im Brennofen läuft dadurch wie folgt ab:

Im Eingangsbereich des Brennofens sorgen wenige Gasbrenner bzw. der Gegenstrom für die erforderliche Erwärmung, um die Verbrennung der nicht umhüllten Pellets in Gang zu setzen. Während die Ofenwagen weiter in den Brennofen geschoben werden, steigt die Temperatur an. Dadurch setzt in den umhüllten Pellets die Pyrolyse ein, die bei Sauerstoffmangel, hervorgerufen durch die Umhüllung, die Hauptprodukte Pyrolysekoks und Pyrolysegas liefert. Unter Temperatureinwirkung werden größere Moleküle gecrackt, sodass letztendlich wasserstoffärmere, entgaste Feststoffe und wasserstoffreicheres Pyrolysegas gebildet werden. Die Rauchgasmenge ist dadurch wesentlich geringer, als bei der konventionellen Verbrennung. Je nach Stärke der Hülle wird sie durch den Gasdruck und die unterschiedlichen Wärmeausdehnungskoeffizienten des Spuckstoffs und der Hülle bei bestimmten Temperaturen kurz vor Erreichen der Brennzone zerfallen, die Pyrolysegase werden frei. Sie verbrennen und setzen gleichzeitig den Koksanteil in Brand. Dadurch wird der größte Anteil an Energie erst kurz vor Erreichen der Brennzone umgesetzt. Diese Vorgänge müssen durch eine entsprechende Steuerung der Luftmengen unterstützt werden.

Man könnte nun einwenden, dass die Beimischung und Umhüllung der Pellets mit Ton eine Vergeudung von Rohstoff darstellen würde, verbunden mit einem entsprechenden finanziellen Aufwand. Dazu bietet das Verfahren eine weitere Möglichkeit, in dem nach kurzer Anlaufzeit der rel. teuere Ton durch die aus der Pelletverbrennung entstehende Asche ersetzt wird. Der verwendete Spuckstoff mit dem Hauptbestandteil Papier, dessen Zellstoff zu 95% aus Holz hergestellt wird, enthält außerdem die Füllstoffe Kaolin, Talkum, Gips, Bariumsulfat, Kreide, Titanweiß u. a.. Diese mineralischen Bestandteile bilden einen Großteil der anfallenden Asche, die sich deshalb hervorragend als Rohstoff für die Umhüllung der Pellets anbietet. Damit ist zugleich eine sinnvolle Verwertung der Asche gesichert. Weiterer Überschuss kann dem Ziegelton als Magerungsmittel beigemischt werden. Die Asche wird jeweils nach dem Brennvorgang abgesaugt. Aus dem neuen Verfahren resultiert somit keinerlei Abfall.

Im Folgenden wird die Erfindung anhand von beispielhaften Zeichnungen näher erläutert, aus denen weitere Merkmale und Vorteile der Erfindung hervorgehen.

Es zeigt:
Figur 1: Schema eines herkömmlichen Brennofens mit Brennkurvenverlauf;
Figur 2: Neuartiger Ofenwagen im Tunnelofen;
Figur 3: Erfindungsgemäßer Pellet mit Kern aus einem Spuckstoff/Tongemisch in Längsrichtung gesehen;
Figur 4: Pellet nach Figur 3 im Querschnitt;
Figur 5: Ablaufschema einer erfindungsgemäßen Gesamtanlage zum Betrieb eines Brennofens mit erfindungsgemäßen Pellets.

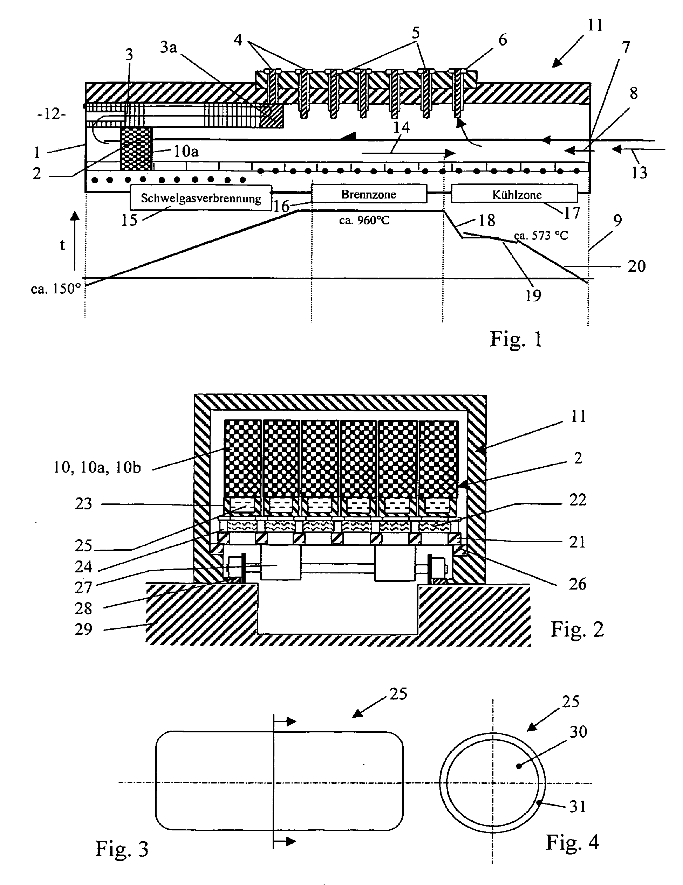

Figur 1 stellt zur Veranschaulichung ein Schema eines herkömmlichen Brennofens mit Brennkurvenverlauf dar, wobei der Brennkurvenverlauf beim erfindungsgemäßen Verfahren identisch oder ähnlich verlaufen soll.

Die Formlinge 10 (= der Besatz) werden auf Ofenwagen 2 geschichtet, die durch den Ofen 11 geschoben werden. Vom Trockner 12 kommend, treten die Formlinge 10 mit einer Temperatur von ca. 150°C in über die Schleuse 1 in den Brennofen 11 ein. Im weiteren Verlauf des Brennprozesses wird die Temperatur durch Gas- oder Ölbrenner 4, 5 stetig erhöht. Die erforderliche Verbrennungsluft 8 wird aus der Kühlzone 17 im Gegenstrom 13 zur Schubrichtung 14 herbeigeführt.

Im Eingangsbereich (Schwelgasverbrennungs-Zone 15) des Ofens 11 beginnen Schwelgase 3a auszutreten, die über die Schwelgasleitung 3 ausgeleitet und nachverbrannt werden. Dieser Vorgang muss abgeschlossen sein, wenn der Besatz 10 die Brennzone 16 erreicht, in der die Teile zum Garbrand bei ca. 800 - 1000 °C eine gewisse Zeit verbleiben. Anschließend folgt eine rel. schnelle Abkühlphase 18 bis oberhalb des sogenannten Quarzsprungs bei 573°C. Die Gegen-Kühlluft 8 erwärmt sich dabei und wird dem Trockner 12 über die Kaltluftabsaugung 6 zugeführt. Im Anschluss an diese Sturzkühlung folgt deshalb eine langsame Abkühlphase 19 bis unterhalb des Quarzsprungs, die dann durch eine rasche Endkühlung 20 bis zum Ofenausgang 9 beim Ofenausgangsschieber 7 abgelöst wird. Die abgeführte Wärme wird zurückgewonnen und dem Trockner 12 zugeführt.

Dieser Temperaturverlauf in den Zonen 15, 16, 17 kann bisher durch die entsprechende Ansteuerung von Brennergruppen 4, 5, für Gas oder Öl, die in unterschiedlichen Ausführungen (z. B. Lanzen- und Zündbrenner) über die Ofenlänge verteilt sind, sowie durch entsprechende Führung der Luft 6, 8 und der Rauchgase sehr genau eingehalten werden. Die Rauchgase werden über Kanäle 3 zur Rauchgasnachverbrennung und von dort in den Schornstein geführt.

Figur 2 zeigt einen neuartigen Ofenwagen 2, bei dem der herkömmliche schwere Unterbau durch einen Isolieraufbau 21 ersetzt wurde. Als Wärmeisolation 22 wurde zudem eine 300 mm starke Schicht aus Keramikfasern eingebaut. Diese Matten 22 bestehen aus einer Mischung von Al₂O₃ und SiO₂ und besitzen bei einer Dichte von z. B. 121 kg/m³ eine Wärmeleitfähigkeit λ im relevanten Temperaturbereich von 0,05 bis 0,07 W/m * K. Im Aufbau nach oben folgen auf die Wärmeisolierung 22 feuerfeste Brennkassetten 23. Sie werden auf Stahlstützen 24 gelagert, die auf den Rahmen 21 aufgeschweisst sind. Die Kassetten 23 dienen einerseits dazu, den Brennstoff 25 in stückiger Form aufzunehmen und andererseits sind sie Unterlage für den Besatz 2 aus den zu brennenden Formlingen 2. Der Besatz 2 schließt also die Kassetten 23 nach oben ab und verhindert dadurch, dass die Asche durch die Belüftung mitgerissen wird. Es entsteht also keine zusätzliche Staubbelastung. Nach unten hin schließt der Rahmen 21 auf einer randseitigen Sanddichtung 26 des Ofens 11 dicht ab und läuft über ein Rollenfahrwerk 27 auf Schienen 28 des Ofens 11, die auf dem Untergrund 29 der Ofen-Umgebung aufliegen.

Figuren 3 (Längsansicht) und 4 (radialer Querschnitt) zeigen nun das erfindungsgemäße biogene und/oder synthetische Material 25 in pelletierter und beschichteter Zylinderform.

Das biogene und/oder synthetische Material 25 besteht aus einem Kern 30, der im Verhältnis 1:1,2 bis 1:3 oder höher verdichtet und unter Zugabe von Ton pelletiert ist, Der Kern 30 des biogenen Materials 25 besitzt eine diesen abdichtend umhüllende Beschichtung 31 aus einer getrockneten Mischung von Wasser und Ton oder Asche.

Natürlich kann das biogene und/oder synthetische Material 25 auch in anderen Formen pelletiert sein, so z.B. in Kugelform, Eiform, Würfelform, Quaderform, Geschosspatronenform, Chipsform, Scheibenform, Flockenform, etc.. Bevorzugt wird aber eine zylindrische Form des pelletierten und beschichteten biogenen und/oder synthetischen Materials 25.

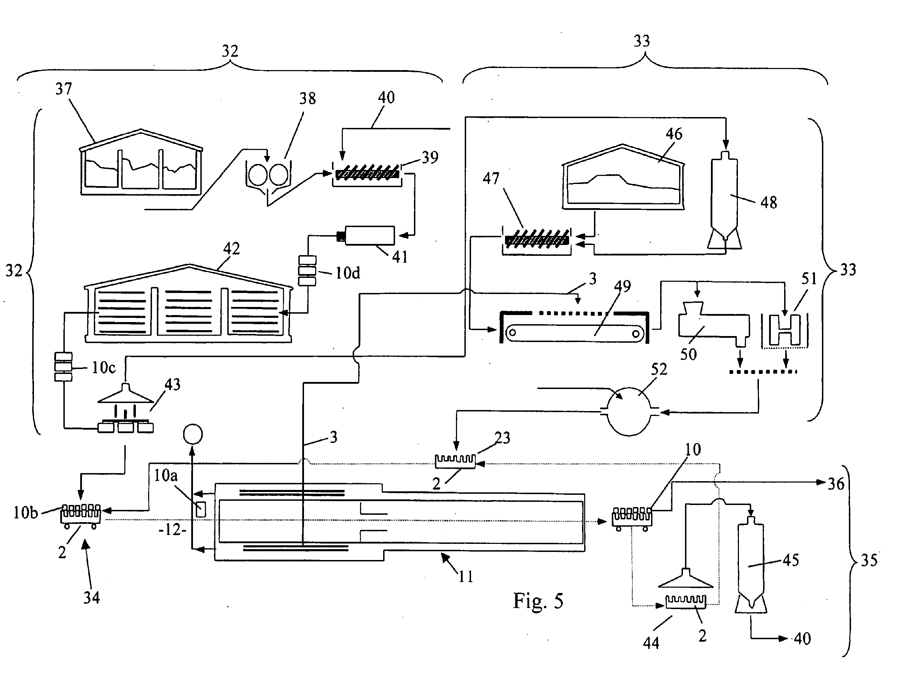

Figur 5 veranschaulicht ein Ablaufschema einer Anlage zum Herstellen von Keramik wie z.B. Ziegeln 10 mittels des erfindungsgemäßen biogenen und/oder synthetischen Materials 25, sowie dessen Herstellung selbst.

Links oben in Figur 5 ist die Vorrichtung 32 zur Herstellung der vorgetrockneten Rohziegel 10b dargestellt, rechts oben in Figur 5 die Vorrichtung 33 zur Herstellung von Briketts oder Pellets 25 des biogenen und/oder synthetischen Materials. Mittig unter den Vorrichtungen 32, 33 ist der Brennofen etwa nach Figur 1 vorgesehen, links davon die Beladestation 34 und rechts davon die Entladestation 35, an die sich rechts davon eine nicht gezeichnete Verpackstation 36 anschließt.

Die Vorrichtung 32 zur Herstellung der vorgetrockneten Rohziegel 10b beinhaltet ein Ton-Rohstofflager 37, in dem verschiedene Qualitäten von Ton gelagert werden, die einem Zerkleinerer 38 zugeführt werden, welcher den zerkleinerten Ton in einen Mischer 39 gibt und der Ton dort mit Magerungsmittel 40 vermischt wird. Aus dem Mischer 39 wird das Ton-Magerungsmittel-Gemisch in eine Vakuumpresse 41 gefördert, aus der dann feuchte Ziegel 10d kommen, die in einen Tockner 42 geleitet werden, wo ihnen Feuchtigkeit entzogen wird. Die teilgetrockneten Ziegel 10c werden anschließend einer Schleifeinrichtung 43 zugeführt, dessen Schleifstaub in die Vorrichtung 33 zur Herstellung von Briketts oder Pellets 25 des biogenen und/oder synthetischen Materials abgesaugt wird.

Die teilgetrockneten und geschliffenen Rohziegel 10b werden dann auf Ofenwagen 2 geschichtet und dem Trockner 12 vor dem Brennofen 11 zugeführt. Die im Trockner 12 weiter getrockneten Rohziegel 10a werden dann im Brennofen 11 gemäß Figur 1 gebrannt und treten dann auf dem Ofenwagen 2 durch den Ofenausgang 9 aus und werden weiter in die Entladestation 35 als gebrannte Ziegel 10 befördert, an die sich die Verpackstation 36 anschließt. In der Entladestation 35 sind noch eine Staubabsaugung 44 mit Silo 45 angeordnet, welcher mit der Magermittelzuführung 40 der Vorrichtung 32 zur Herstellung von Rohziegel 10b verbunden ist.

Die Vorrichtung 33 zur Herstellung von Briketts oder Pellets 25 des biogenen und/oder synthetischen Materials beinhaltet ein Lager 46 für Reinjekt (Anlagenexterne oder interne Abfallstoffe), welches einem Mischer 47 zugeführt wird, zusammen mit dem Ton-Schleifstaub aus der Schleifeinrichtung 43 der Vorrichtung 32, der in einem Silo 48 gespeichert wird. Das so gemischte Reinjekt-Ton-Gemisch wird einem Trockner 49 zugeführt, der seine Wärmeenergie aus der Schwelgasverbrennung 3a der Schwelgasleitung 3 (oder anderer Ofen-Abwärme) des Brennofens 11 bezieht. Dem Trockner 49 nachgeschaltet ist eine Brikettier- 50 und/oder Pelletiervorrichtung 51, welche den Kern 30 der Briketts bzw. Pellets 25 erzeugen, die dann eine Beschichtung 31 in der Beschichtungsvorrichtung 52 erhalten. Die somit in der Vorrichtung 52 hergestellten Briketts/Pellets 25 werden anschließend in die Kassetten 23 der Ofenwagen 2 eingefüllt. Die mit Briketts/Pellets 25 befüllten Ofenwagen 2 werden dann in die Beladestation 34 gefahren und dort mit den vorgetrockneten Roh-Ziegeln 10b bestückt und anschließend in den Trockner 12 und danach als weiter getrocknete Roh-Ziegel 10a in den Brennofen 11 gefahren.

Die Figur 5 zeigt also ein in sich geschlossenes Anlagenflussdiagramm, welches die Rohstoffe, als auch die eingesetzte Energien optimal verwertet, so dass möglichst wenig Rohstoffe und Energien von außen her zugeführt werden muss und möglichst wenig Abfallstoffe und Exergie nach außen hin abgeführt werden muss.

### Zeichnungslegende

- 1.: Ofeneinfahrt über Schleuse
- 2.: Tunnelofenwagen (TOW)
- 3.: Schwelgasleitung; 3a Schwelgasverbrennung
- 4.: Hochgeschwindigkeitsbrenner
- 5.: Deckenfeuerung
- 6.: Sturzkühlung (Kaltluftabsaugung)
- 7.: Ofenausgangsschieber
- 8.: Luftzufuhr im Gegenstrom
- 9.: Ofenausgang
- 10.: gebrannte Ziegel; 10a Formling (z.B. ungebrannte, getrocknete Roh- Ziegel; 10b vorgetrocknete und geschliffene Roh-Ziegel; 10c vorgetrocknete Roh-Ziegel; 10d nasse Roh-Ziegel
- 11.: Brennofen
- 12.: vorgeschalteter Trockner
- 13.: Gegenstromrichtung der Kühlluft
- 14.: Schieberichtung des TOW
- 15.: Schwelgasverbrennungs-Bereich
- 16.: Brennzone
- 17.: Kühlzone
- 18.: erste schnelle Abkühlphase
- 19.: langsame Abkühlphase
- 20.: zweite schnelle Abkühlphase
- 21.: Isolieraufbau
- 22.: Wärmeisolation
- 23.: Brennkassetten
- 24.: Stahlstützen
- 25.: biogener und/oder synthetischer Brennstoff
- 26.: Sanddichtung
- 27.: Fahrwerk von 2
- 28.: Schienen von 11
- 29.: Untergrund
- 30.: Kern von 25
- 31.: Beschichtung von 25
- 32.: Vorrichtung zur Herstellung der vorgetrockneten Rohziegel 10b
- 33.: Vorrichtung zur Herstellung von Briketts oder Pellets 25
- 34.: Beladestation
- 35.: Entladestation
- 36.: Verpackstation
- 37.: Ton-Rohstofflager
- 38.: Zerkleinerer
- 39.: Mischer
- 40.: Magerungsmittel
- 41.: Vakuumpresse
- 42.: Trockner
- 43.: Schleifeinrichtung
- 44.: Staubabsaugung
- 45.: Silo für 44
- 46.: Lager für Reinjekt
- 47.: Mischer
- 48.: Silo
- 49.: Trockner
- 50.: Brikettiervorrichtung
- 51.: Pelletiervorrichtung
- 52.: Beschichtungsvorrichtung

## Patentansprüche

1. Verfahren zum Brennen von Keramik, insbesondere von Ziegeln (10), innerhalb eines Bennofens (11), wobei Energieträger in Form von Briketts und/oder Pellets (25) biogener und/oder synthetischer Materialien zum Brennen der Keramik in Brennkassetten (23) eines Brennofenwagens (2) eingefüllt werden, wobei die Briketts/Pellets (25) jeweils mindestens einen hochverdichteten Kern (30) aus leicht entzündbaren Spuckstoffen d.h. Abfallstoffen aus dem Altpapier-Recycling, vermischt mit Mineralien enthalten, der von einer aus Mineralien bestehenden Beschichtung (31) umhüllt ist, wobei die gesamten Briketts/Pellets (25) oder zumindest deren Kerne (30) vor dem Einfüllen in die Brennkassetten (23) auf eine Dichte im Verhältnis insbesondere gleich 1:1,2 bis 1:3 oder auch höher gegenüber dem Ausgangsstoff hochverdichtet werden, **dadurch gekennzeichnet, dass** die hochverdichteten Kerne (30) der Briketts/Pellets (25) einen Energiegehalt von 4,86 bis 5,84 kWh/kg besitzen und die Beschichtung (31) aus Ton und/oder Asche bei der Mehrheit der Briketts/Pellets (25) erst zu Beginn einer Brennzone (16) bei ca. 600°C zerfällt, und dass die zu brennenden Keramiken (10a, 10b), derart auf den Brennkassetten (23) aufgelegt werden, dass die darin eingefüllten Briketts/Pellets (25) unter Luftzufuhrmangel oder Luftzufuhrabschluss vollkommen abgedeckt werden.

2. Verfahren zum Brennen von Keramik nach Anspruch 1, **dadurch gekennzeichnet, dass** die Abwärme des Brennofens (11) zur weiteren Trocknung der vorgetrockneten Roh-Ziegel (10b) in einem dem Brennofen (11) vorgeschalteten Trockner (12) genutzt wird, sowie ggfs. zur Trocknung von Roh-Briketts und/oder Pellets (25) in einem Trockner (49).

3. Verfahren nach Anspruch 1 oder 2, **dadurch gekennzeichnet, dass** die Mineralien des mindestens einen Kernes (30) der Briketts/Pellets (25) Ton und/oder Asche enthalten.

4. Verfahren nach einem der Ansprüche 1 bis 3, **dadurch gekennzeichnet, dass** das biogene und/oder synthetische Material der Briketts und/oder Pellets (25), oder mindestens deren Kerne (30), Papier, Textilien, Pigmente,Kunststoffe beinhaltet.

5. Verfahren nach Anspruch 4, **dadurch gekennzeichnet, dass** die Kunststoffe Polystyrol und/oder Beschichtungsmaterialien wie z.B. Lacke sind oder enthalten.

6. Verfahren nach einem der Ansprüche 1 bis 5, **dadurch gekennzeichnet, dass** die Briketts und/oder Pellets (25) eine zylindrische Form aufweisen, oder aber Kugelform, Eiform, Würfelform, Quaderform, Geschosspatronenform, Chipsform, Scheibenform, Flockenform.

7. Verfahren nach einem der Ansprüche 1 bis 6, **dadurch gekennzeichnet, dass** die Dicke der Beschichtung (31) der Kerne (30) zwischen 1 bis 10 % der Dicke des Kerns (30) liegt, insbesondere bei 5%.

8. Verfahren nach einem der Ansprüche 1 bis 7, **dadurch gekennzeichnet, dass** die Asche der Beschichtung (31) der Kerne (30) Ton enthält, und insbesondere Kaolin, Talkum, Gips, Bariumsulfat, Kreide und/oder Titanweiß.

9. Verfahren nach einem der Ansprüche 1 bis 8, **dadurch gekennzeichnet, dass** die Asche für die Beschichtung (31) der Kerne (30), aus dem Endprodukt der thermisch genutzten Briketts und/oder Pellets (25) nach dem Brennen der Keramik bezogen wird.

## Claims

1. Method for firing ceramics, in particular bricks (10), within a furnace (11), energy carriers in the form of briquettes and/or pellets (25) of biogenic and/or synthetic materials being introduced to fire the ceramics in firing cassettes (23) of a furnace carriage (2), the briquettes/pellets (25) in each case containing at least one highly compressed core (30) made of easily inflammable reject materials, i.e. waste materials from waste paper recycling, mixed with minerals, which core is surrounded by a coating (31) consisting of minerals, the entire briquettes/pellets (25) or at least their cores (30) being highly compressed before introduction into the firing cassettes (23) to a density in the ratio, in particular, of equal to 1:1.2 to 1:3 or else higher relative to the starting material, **characterised in that** the highly compressed cores (30) of the briquettes/pellets (25) have an energy content of 4.86 to 5.84 kWh/kg and the coating (31) of clay and/or ash in the majority of the briquettes/pellets (25) only disintegrates at the beginning of a firing zone (16) at about 600°C, and **in that** the ceramics (10a, 10b) to be fired are placed on the firing cassettes (23) in such a way that the briquettes/pellets (25) introduced therein are completely covered with a lack of air supply or a conclusion of the air supply.

2. Method for firing ceramics according to claim 1, **characterised in that** the waste heat of the furnace (11) is used for further drying of the pre-dried crude brick (10b) in a dryer (12) connected upstream of the furnace (11), and optionally for the drying of crude briquettes and/or pellets (25) in a dryer (49).

3. Method according to claim 1 or 2, **characterised in that** the minerals of the at least one core (30) of the briquettes/pellets (25) contain clay and/or ash.

4. Method according to any one of claims 1 to 3, **characterised in that** the biogenic and/or synthetic material of the briquettes and/or pellets (25), or at least their cores (30), contain paper, textiles, pigments, plastics materials.

5. Method according to claim 4, **characterised in that** the plastics materials are or contain polystyrene and/or coating materials such as, for example, lacquers.

6. Method according to any one of claims 1 to 5, **characterised in that** the briquettes and/or pellets (25) have a cylindrical shape or else a spherical shape, oval shape, cube shape, parallelepiped shape, projectile cartridge shape, chip shape, disc shape or flake shape.

7. Method according to any one of claims 1 to 6, **characterised in that** the thickness of the coating (31) of the cores (30) is between 1 and 10% of the thickness of the core (30), in particular 5%.

8. Method according to any one of claims 1 to 7, **characterised in that** the ash of the coating (31) of the cores (30) contains clay, and in particular kaolin, talcum, plaster, barium sulphate, chalk and/or titanium white.

9. Method according to any one of claims 1 to 8, **characterised in that** the ash for the coating (31) of the cores (30) is obtained from the end product of the thermally used briquettes and/or pellets (25) after the firing of the ceramics.

## Revendications

1. Procédé de cuisson de céramique, en particulier de tuiles (10), à l'intérieur d'un four (11), étant précisé que des porteurs d'énergie sous forme de briquettes et/ou de pastilles (25) de matériaux biogènes et/ou synthétiques sont chargés dans des cassettes de cuisson (23) d'un chariot de four (2) en vue de la cuisson de la céramique, que les briquettes/pastilles (25) contiennent chacune au moins un noyau très comprimé (30) qui est composé de détritus facilement inflammables, c'est-à-dire de déchets issus du recyclage de vieux papiers, mélangés à des minéraux, et qui est enrobé à l'aide d'un revêtement (31) composé de minéraux, que l'ensemble des briquettes/ pastilles (25) ou au moins leurs noyaux (30), avant d'être chargés dans les cassettes de cuisson (23), sont soumis à une forte compression jusqu'à une densité en particulier de 1:1,2 à 1:3 ou même plus par rapport à la matière de départ, **caractérisé en ce que** les noyaux très comprimés (30) des briquettes/pastilles (25) ont une valeur énergétique de 4,86 à 5,84 kWh/kg et le revêtement (31) en argile et/ou cendre, pour la plupart des briquettes/pastilles (25), ne se décompose qu'au début d'une zone de cuisson (16), à environ 600°C, et **en ce que** les céramiques à cuire (10a, 10b) sont posées sur les cassettes de cuisson (23) de telle sorte que les briquettes/pastilles (25) chargées dans celles-ci soient entièrement couvertes, avec une absence d'amenée d'air ou une obturation par rapport à l'amenée d'air.

2. Procédé de cuisson de céramique selon la revendication 1, **caractérisé en ce que** la chaleur résiduelle du four (11) est utilisée pour le séchage supplémentaire des tuiles brutes pré-séchées (lOb), dans un séchoir (12) monté avant le four (11), et éventuellement pour le séchage de briquettes brutes et/ou de pastilles (25) dans un séchoir (49).

3. Procédé selon la revendication 1 ou 2, **caractérisé en ce que** les minéraux du ou des noyaux (30) des briquettes/pastilles (25) contiennent de l'argile et/ou de la cendre.

4. Procédé selon l'une des revendications 1 à 3, **caractérisé en ce que** le matériau biogène et/ou synthétique des briquettes et/ou des pastilles (25), ou au moins de leurs noyaux (30), contient du papier, des textiles, des pigments, des matières plastiques.

5. Procédé selon la revendication 4, **caractérisé en ce que** les matières plastiques sont ou contiennent du polystyrène et/ou des matériaux de revêtement comme par exemple des vernis.

6. Procédé selon l'une des revendications 1 à 5, **caractérisé en ce que** les briquettes et/ou pastilles (25) ont une forme cylindrique ou une forme sphérique, ovale, cubique, parallélipipédique, la forme de cartouches de projectiles, de copeaux, de disques ou de flocons.

7. Procédé selon l'une des revendications 1 à 6, **caractérisé en ce que** l'épaisseur du revêtement (31) des noyaux (30) représente entre 1 et 10 % de l'épaisseur du noyau (30), et est en particulier de l'ordre de 5 %.

8. Procédé selon l'une des revendications 1 à 7, **caractérisé en ce que** la cendre du revêtement (31) des noyaux (30) contient de l'argile, et en particulier du kaolin, du talc, du gypse, du sulfate de baryum, de la craie et/ou du blanc de titane.

9. Procédé selon l'une des revendications 1 à 8, **caractérisé en ce que** la cendre pour le revêtement (31) des noyaux (30) est obtenue après la cuisson de la céramique, à partir du produit fini de la briquette et/ou pastille (25) utilisée thermiquement.
